# EUROPÄISCHE PATENTSCHRIFT

(11) **EP 0 631 857 B1**
(45) Veröffentlichungstag und Bekanntmachung des Hinweises auf die Patenterteilung: **20.05.1998**
(21) Anmeldenummer: 93115688.9
(22) Anmeldetag: 29.09.1993
(51) Int. Cl.: B29C 45/17, B29C 45/66

(54) **Kunststoff-Spritzgiessmaschine mit einer Formschliesseinheit**
Plastic injection moulding machine with a mould closing unit
Machine à mouler par injection les matières plastiques avec une unité de fermeture de moule

(30) Priorität: 29.05.1993 DE 4317997; 19.06.1993 DE 4320366
(43) Veröffentlichungstag der Anmeldung: 04.01.1995
(73) Patentinhaber: Hehl, Karl, 72290 Lossburg (DE)
(72) Erfinder: Hehl, Karl, 72290 Lossburg (DE)
(74) Vertreter: Frank, Gerhard, Dipl.-Phys.

(56) Entgegenhaltungen:
- EP-A- 0 585 630
- WO-A-94/17977
- DE-B- 1 109 356
- GB-A- 2 012 206
- PATENT ABSTRACTS OF JAPAN vol. 8, no. 284 (M-348) (1721) 26. Dezember 1984 & JP-A-59 152 832 (YAMASHIRO SEIKI SEISAKUSHO)
- PATENT ABSTRACTS OF JAPAN vol. 7, no. 68 (M-201) 19. März 1983 & JP-A-57 209 799 (NITSUSEI JIYUSHI KOGYO)

## Beschreibung

Die Erfindung betrifft eine Formschließeinheit nach dem Oberbegriff des Anspruches 1.

Aus der DE-B 11 09 356 ist es bekannt, bei einer derartigen Kunststoff-Spritzgießmaschine zwei Kolben-Zylindereinheiten vorzusehen, wobei die eine Kolben-Zylindereinheit zur Aufbringung der Schließkräfte eingesetzt wird. Mittig angeordnet befinden sich Zugholme. Symmetrisch zu der Kolben-Zylindereinheit, die dem Formschluß zugeordnet ist, ist eine weitere Kolben-Zylindereinheit angeordnet, die gleichzeitig beaufschlagt wird, so daß auf beiden Seiten eine gleichmäßige Belastung lediglich in axialer Richtung erfolgt. Insofern bilden hier zwar die Querholme in Verbindung mit den Zugholmen und der zweiten Kolben-Zylindereinheit gemeinsam einen Rahmen, jedoch ist dieser nicht gesondert von den übrigen Teilen der Maschine vorgesehen, sondern vielmehr ist der Kraftrahmen die Maschine selbst. Darüber hinaus sind keine gelenkigen Verbindungen im Anschlußbereich an den Formträger vorgesehen, so daß sich Verformungen noch viel stärker auch auf die restliche Maschine auswirken.

Bei einer Kunststoff-Spritzgießmaschine nach der DE-A 28 53 577 sind stationärer Formträger und beweglicher Formträger über ein Hebelsystem miteinander verbunden, das zwei vertikal stehende Hebel und einen horizontal liegenden Längsträger umfaßt, der gelenkig mit den Hebeln verbunden ist. Gegenüber dem Längsträger befindet sich in einem größeren Abstand zur Schließachse ein weiteres Verbindungselement, das durch eine Kolben-Zylinder-Einheit gebildet ist. Am beweglichen Formträger ist ein Hebel angelenkt, der über ein zweite Kolben-Zylinder-Einheit den beweglichen Formträger in Schließrichtung axial bewegt und für das Schließen der Form bestimmt ist. Nachdem die Form geschlossen ist, wird dann die am unteren Ende der Hebel angeordnete Kolben-Zylinder-Einheit zum Aufbringen der Schließkraft eingesetzt. Somit ist zwar ein von Holmen freier Formspannraum geschaffen, jedoch werden Kräfte über den stationären Formträger und über die Anlenkung der zweiten Kolben-Zylinder-Einheit in der Nähe des Formaufspannraums so in den Maschinenfuß eingeleitet, daß der Maschinenfuß Verformungen unterworfen ist, die zu Ungenauigkeiten beim Formschluß und somit bei der Herstellung der Spritzteile führen. Die Entstehung von Verformungen wird dabei zusätzlich dadurch unterstützt, daß die Spritzgießeinheit mit dem beweglichen Formträger gemeinsam verschoben wird.

Ausgehend von diesem Stand der Technik liegt der Erfindung die Aufgabe zugrunde, eine Formschließeinheit der eingangs genannten Gattung derart weiterzubilden, daß die auftretenden Kräfte zuverlässig weitestgehend außerhalb des Formspannraumes abgeleitet werden und dennoch höchsten Anforderungen an die Präzision des Formschlusses genügt ist.

Diese Aufgabe wird durch eine Kunststoff-Spritzgießmaschine mit den Merkmalen des Anspruches 1 gelöst.

Der Verbindungspunkt der Formschließeinheit mit der übrigen Spritzgießmaschine ist dabei der stationäre Formträger. Dieser ist über Kraftübertragungsmittel mit dem beweglichen Formträger verbunden, an denen sich eine oder mehrere Schließeinrichtungen so abstützen, daß eine zusätzliche Einleitung von Kräften in den Maschinenfuß weitgehend oder vollständig vermieden ist. Vor allem die aufgebauten Schließkräfte werden über die verformbaren Kraftübertragungsmittel abgeleitet, ohne die Lage der Formträger zu beeinflussen. Am Maschinenfuß angeschraubte Peripheriegeräte, wie Handling- und Entnahmeeinrichtungen werden von den Verformungen nicht beeinflußt, so daß auch dort stets eine exakte Ansteuerung von Ablagepunkten reproduzierbar möglich ist. Der horizontale Düsennullpunkt bleibt auch bei maximaler Zuhaltekraft bei Null stehen, da der Düsennullpunkt durch die Anlage am stationären Formträger von den Verformungen unabhängig ist. Der Formspannraum ist aufgrund der Ableitung der Kräfte über die Kraftübertragungsmittel frei zugänglich. Die Formträger sind gelenkig mit den Kraftübertragungsmitteln verbunden, so daß die Verformungen von der Formschließeinheit zuverlässig abgekoppelt sind. Es wird also das Prinzip verfolgt, die Verformungen über ein Verformungselement abzuleiten, das auf weitere Teile der Maschine keinen Einfluß hat, während die Schließkräfte ungehindert in Schließrichtung aufgebracht werden.

Die gelenkigen Lagerungen der Zugholme können durch den Einsatz von Kugelsegmenten verwirklicht werden, so daß sich ein ideeller Drehpunkt im Gelenkbereich ergibt und Schrägstellungen der Hebel leicht ausgeglichen werden können. Diese Lagerungen ermöglichen aber auch, insbesondere bei einer Ausbildung nach Anspruch 6, die Einstellung der Planparallelität der Formträger.

Die Schließeinrichtung kann hydraulisch ausgebildet werden, kann jedoch auch nach den Ansprüche 8-11 elektromechanisch wirken. Zu diesem Zweck werden entweder die Zug- und Druckholme mit Spindelbereichen versehen, so daß Spindelantriebe einsetzbar sind. Die Länge des Druckholms kann aber auch so bemessen werden, daß er aus einer geneigten Stellung in eine Spannstellung überführt werden kann und dabei die Schließkraft aufbringt. Ebenso kann der Druckholm über einen Exzenter zur Erzeugung der Schließkraft betätigt sein. In diesen Fällen kann der Antrieb für die Bewegung des beweglichen Formträgers vom Aufbringen der Schließkraft abgekoppelt werden, zumal die beiden System für unterschiedliche Kräfte bemessen werden müssen.

Werden die Zug- und Druckholme entsprechend bemessen, können sie problemlos vollständig im Maschinenfuß verschwinden, was auch das Verkaufsargument verstärkt, daß nun tatsächlich der Formspannraum frei zugänglich ist, so daß größere Formaufspannmaße zu erzielen sind.

Im folgenden wird die Erfindung anhand der Zeichnungen an sechs Ausführungsbeispielen erläutert. Es zeigen:
- Fig. 1: die auf einem Maschinenfuß angeordnete Formschließeinheit der Kunststoff-Spritzgießmaschine,
- Fig. 1a: eine Ansicht gemäß Fig. 1 in einem weiteren Ausführungsbeispiel,
- Fig. 2: einen Schnitt nach Linie 2-2 von Fig. 1,
- Fig. 3: eine Ansicht der Formschließeinheit aus Richtung der Spritzgießeinheit,
- Fig. 4: einen vergrößerten Ausschnitt von Fig. 1 im Bereich der gelenkigen Lagerung des stationären Formträgers,
- Fig. 5: einen vergrößerten Ausschnitt von Fig. 1 im Bereich der gelenkigen Lagerung zwischen Zugholm und Hebel,

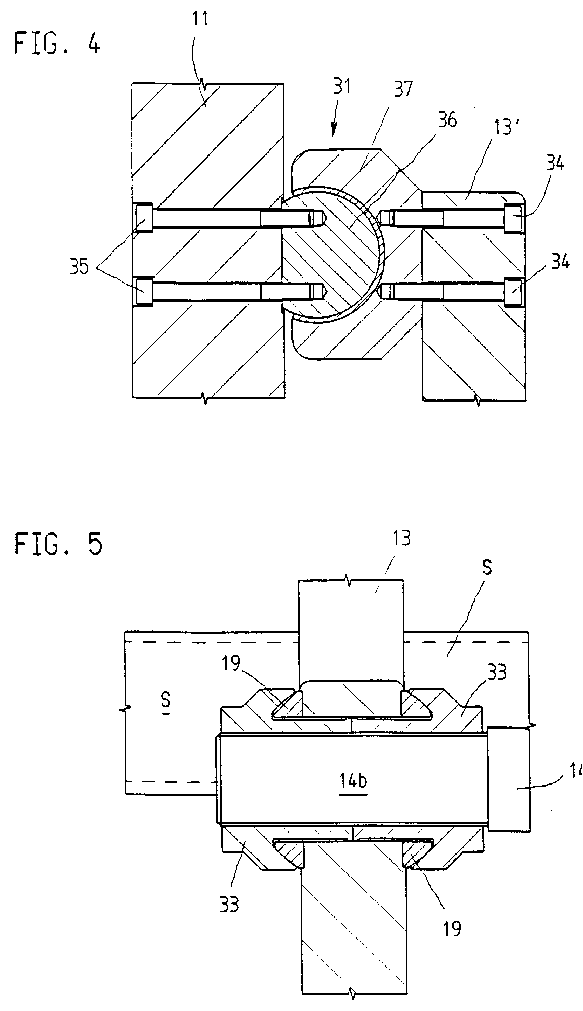

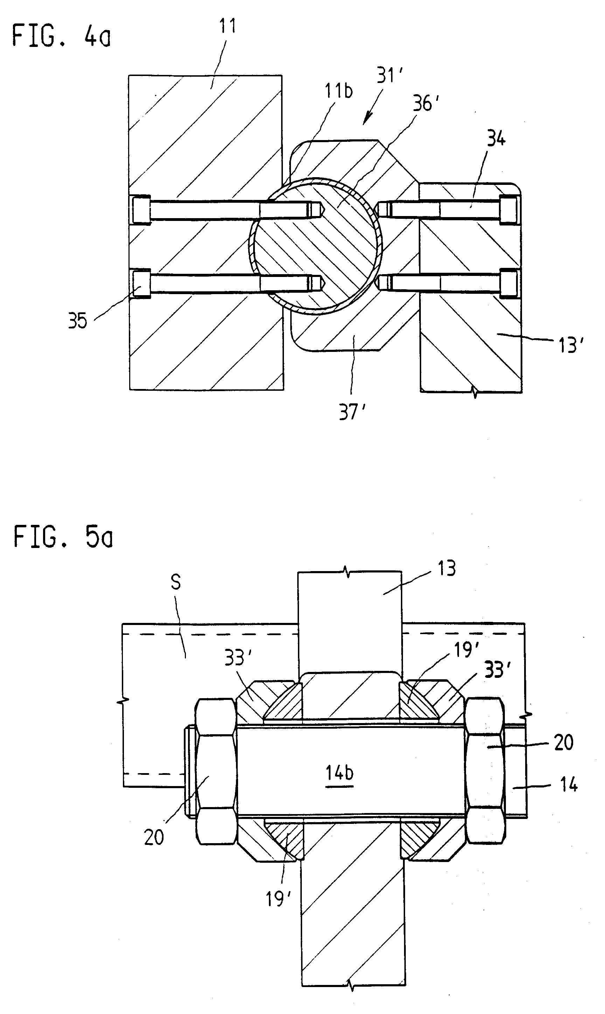

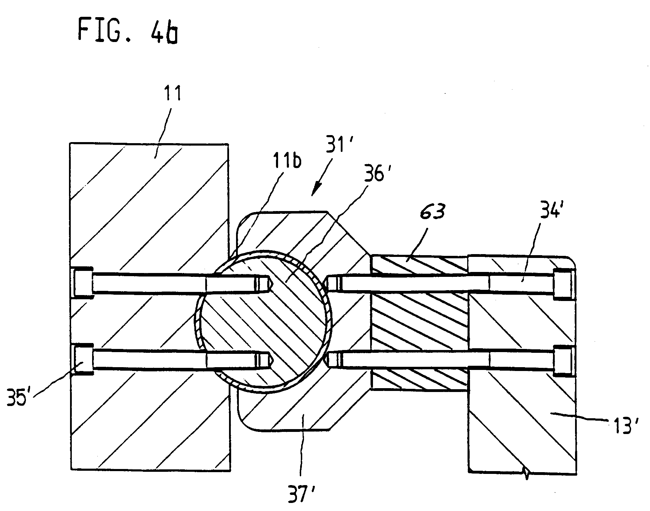

- Fig. 4a,4b: alternative Ausführungen der gelenkigen Lagerung von Fig. 4, ohne und mit Unterlegstück,
- Fig. 5a: eine alternative Ausführungsform der gelenkigen Lagerung von Fig. 5,

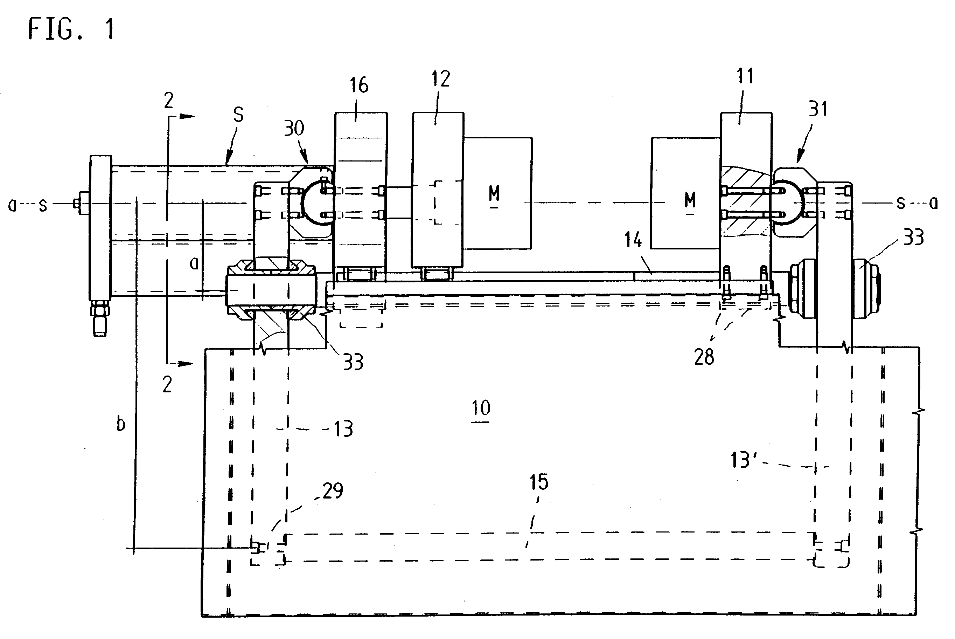

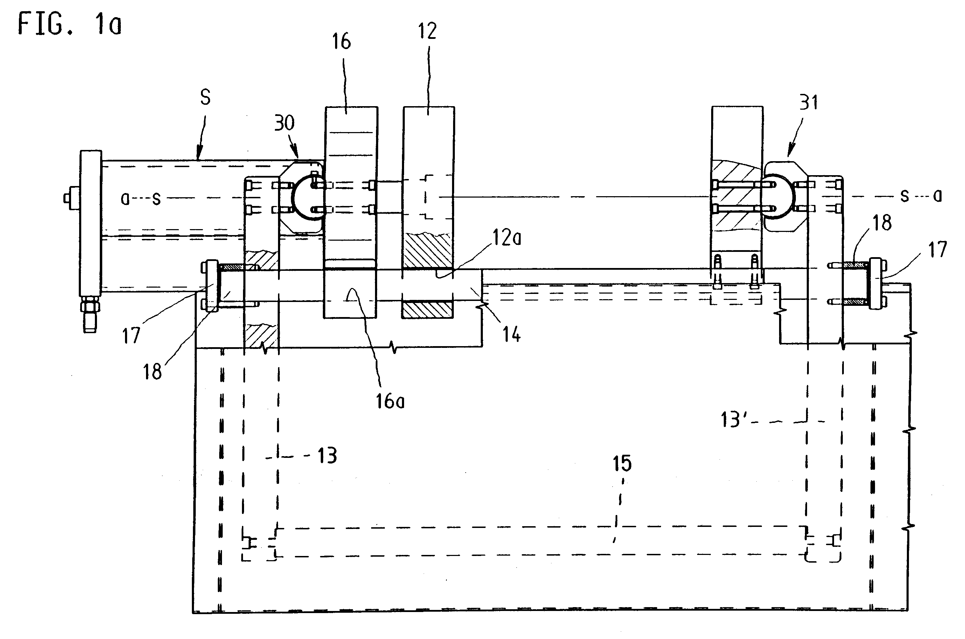

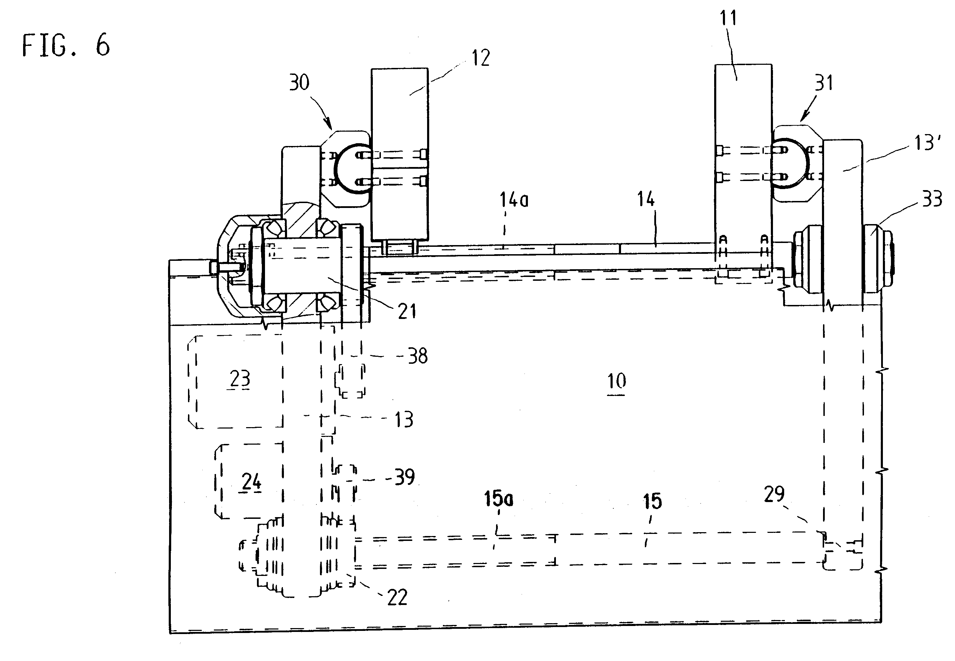

- Fig. 6: eine Ansicht der Spritzgießmaschine gemäß Fig. 1 in einem dritten Ausführungsbeispiel mit elektromechanischem Antrieb,

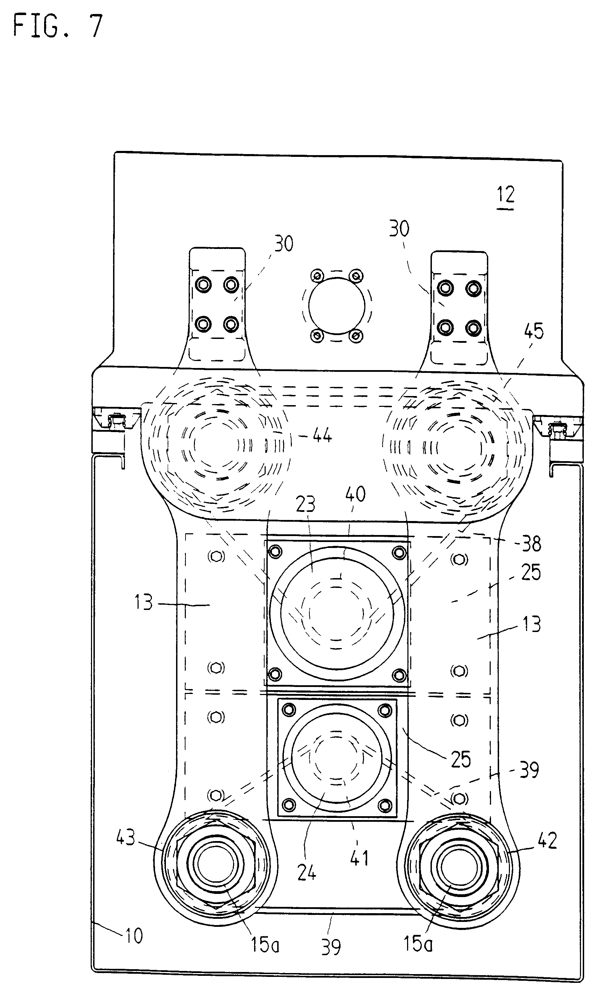

- Fig. 7: eine Stirnansicht auf die Spritzgießmaschine von Fig.6 von links bei abgenommener Verkleidung des Maschinenfußes,

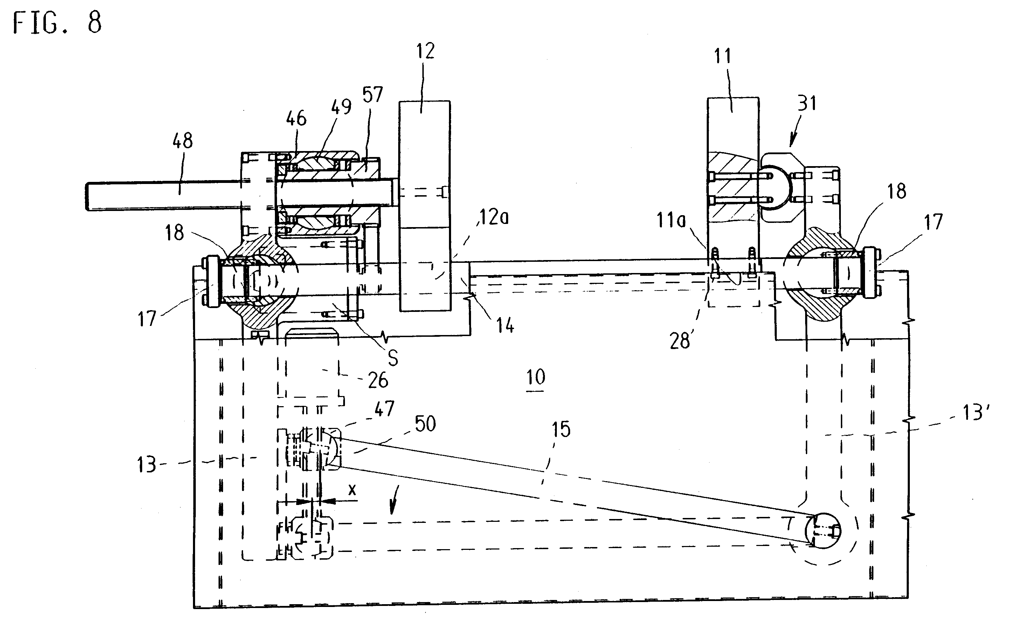

- Fig. 8: eine Ansicht der Spritzgießmaschine gemäß Fig. 6 in einem vierten Ausführungsbeispiel mit elektromechanischen Antrieb,

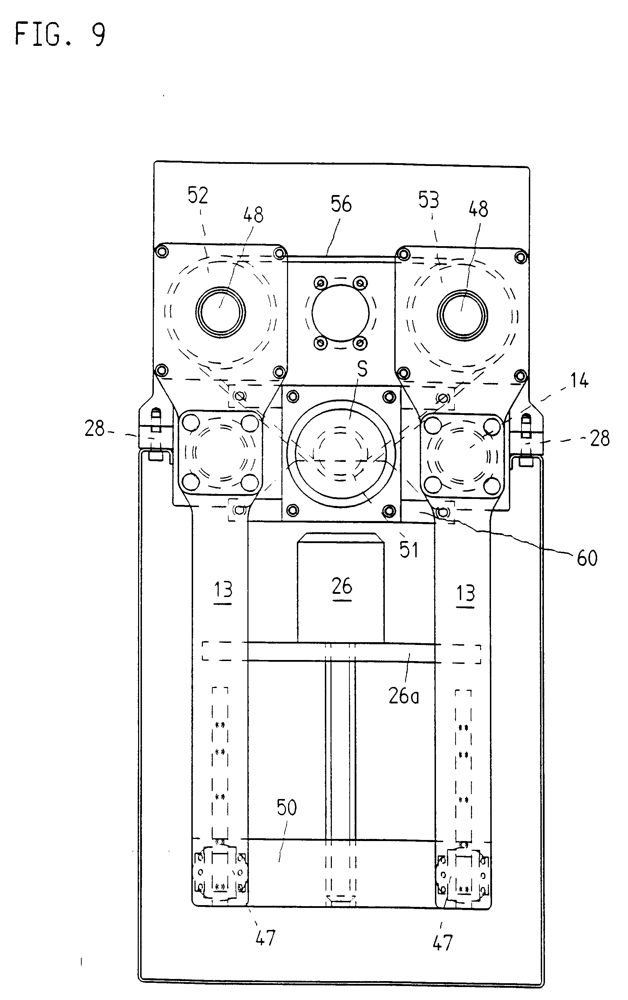

- Fig. 9: eine Ansicht des Ausführungsbeispiels von Fig. 8 in einer Darstellung gemäß Fig. 7,

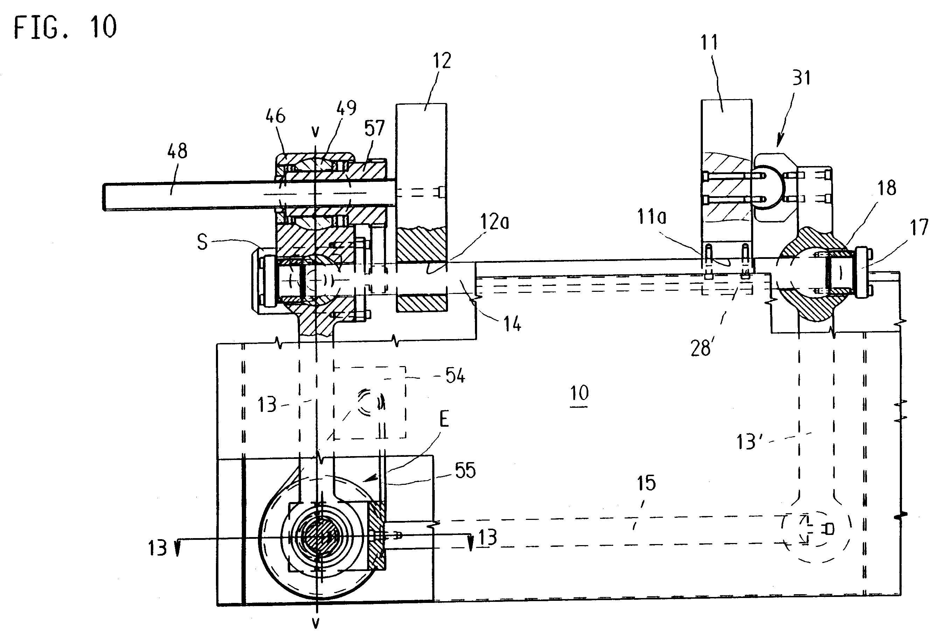

- Fig. 10: eine Ansicht der Spritzgießmaschine gemäß Fig. 6 in einem fünften Ausführungsbeispiel mit elektromechanischem Antrieb,

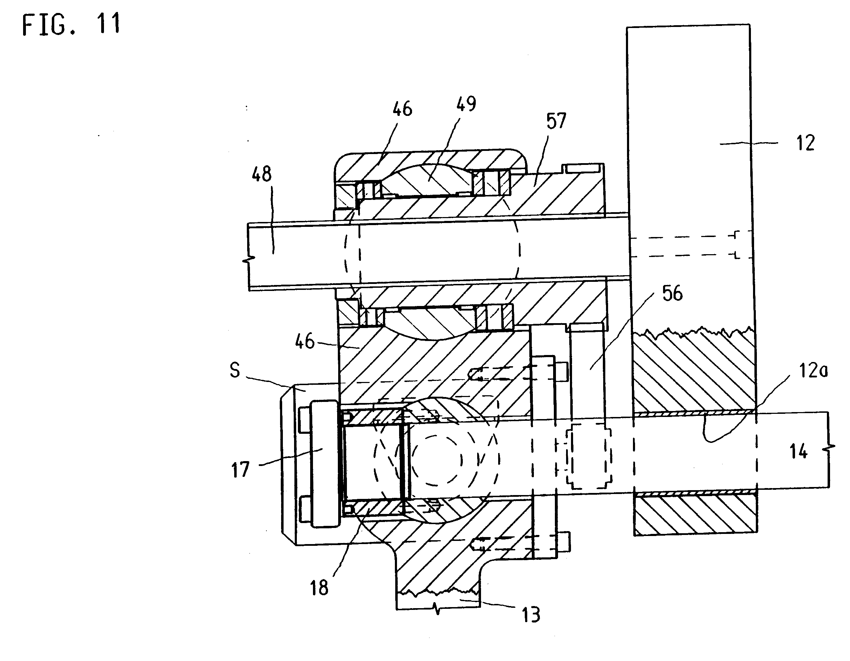

- Fig. 11: einen vergrößerten Ausschnitt von Fig. 10 im Bereich der gelenkigen Lagerung des beweglichen Formträgers,

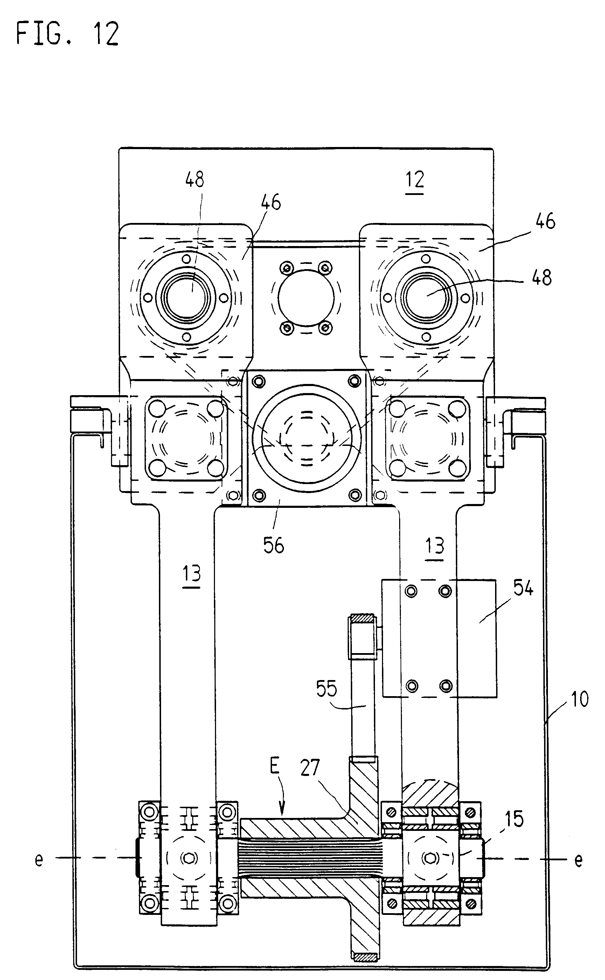

- Fig. 12: eine Ansicht der Spritzgießmaschine gemäß Fig. 10 in einer Darstellung gemäß Fig. 7,

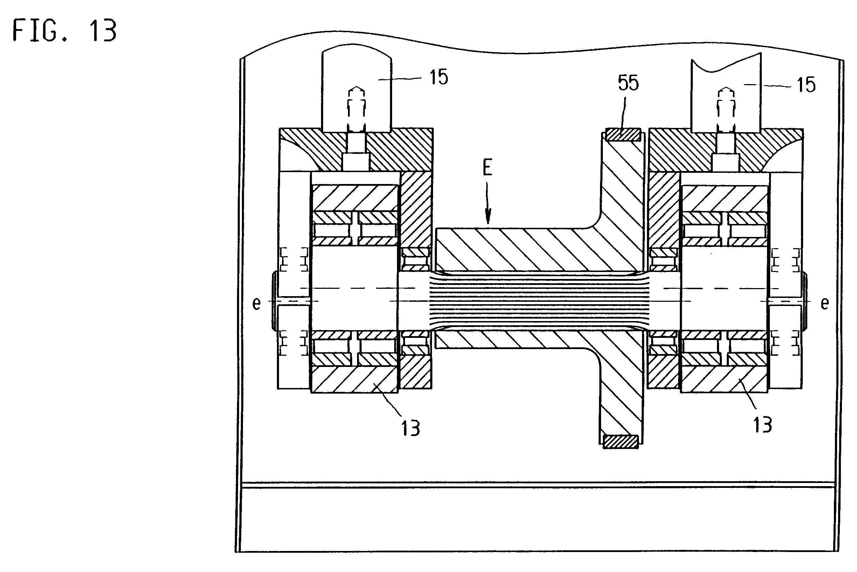

- Fig. 13: einen Schnitt gemäß Linie 13-13 von Fig. 10,

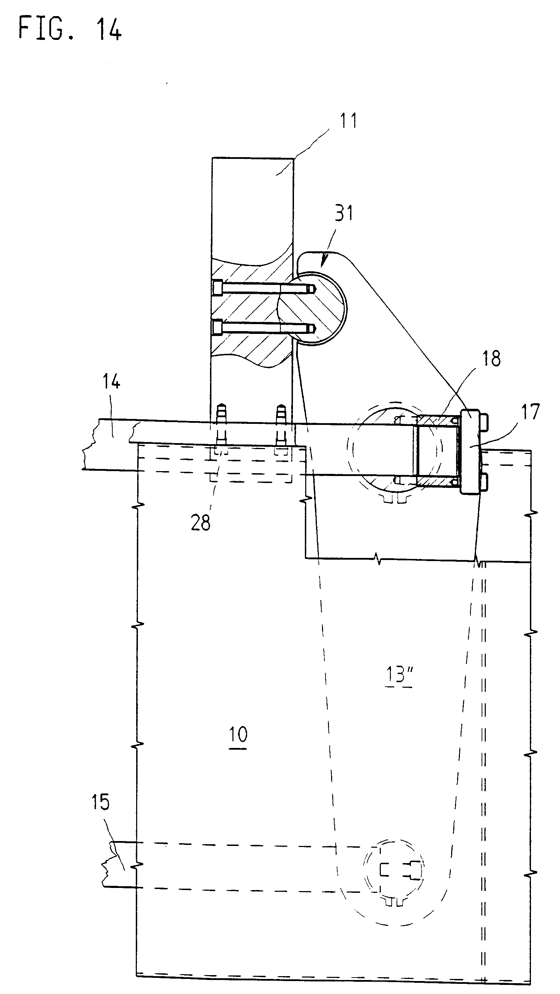

- Fig. 14: einen vergrößerten Ausschnitt durch eine Spritzgießmaschine in einer Ansicht gemäß Fig. 1 im Bereich der Hebel in einem sechsten Ausführungsbeispiel ,

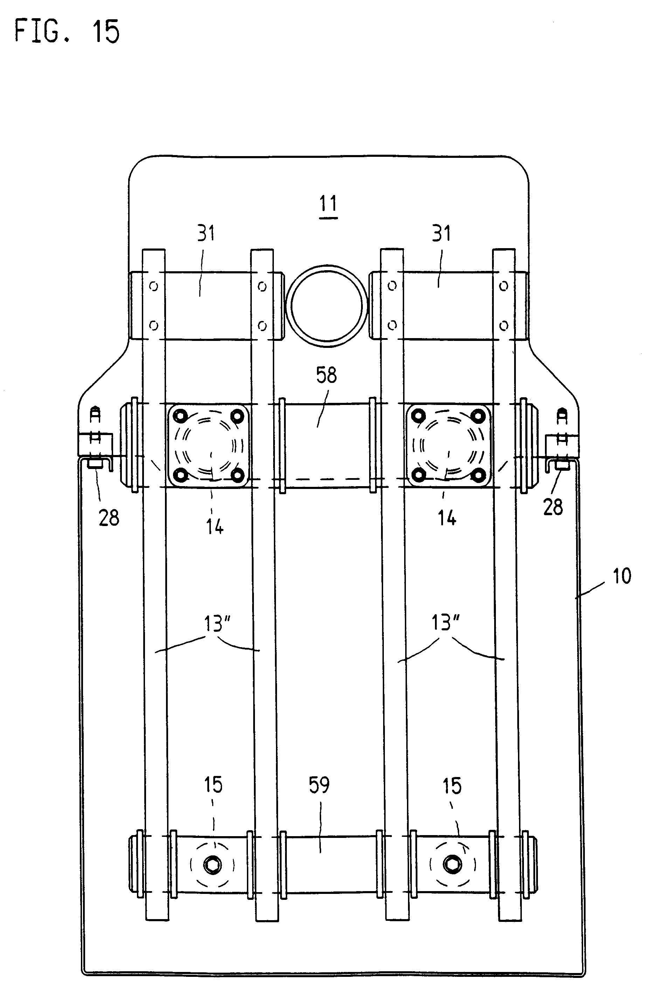

- Fig. 15: eine Ansicht des Ausschnitts gemäß Fig. 14 aus Sicht der Spritzgießeinheit,

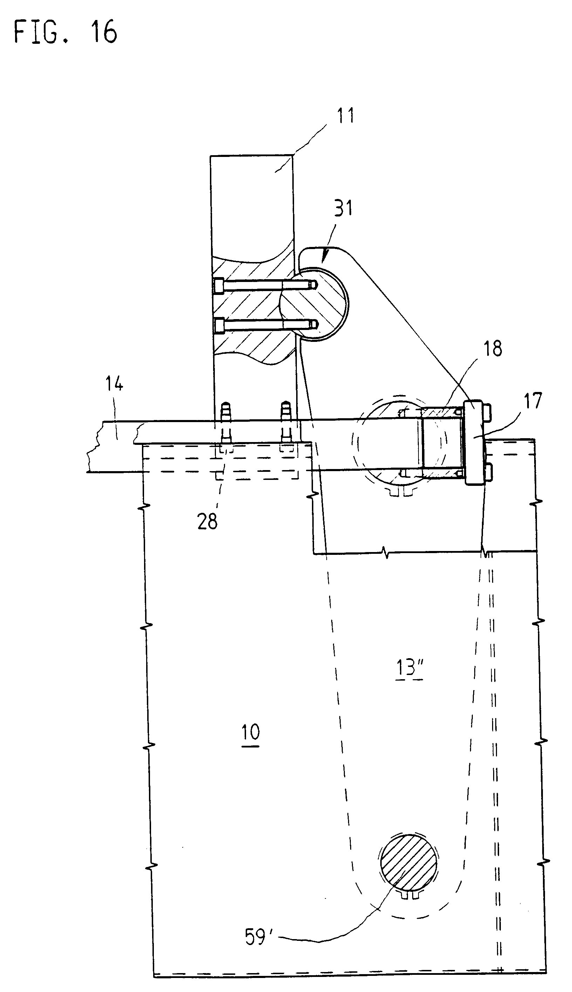

- Fig. 16: eine Darstellung gemäß Fig. 14, wobei der Maschinenfuß als Verbindungselement eingesetzt ist,

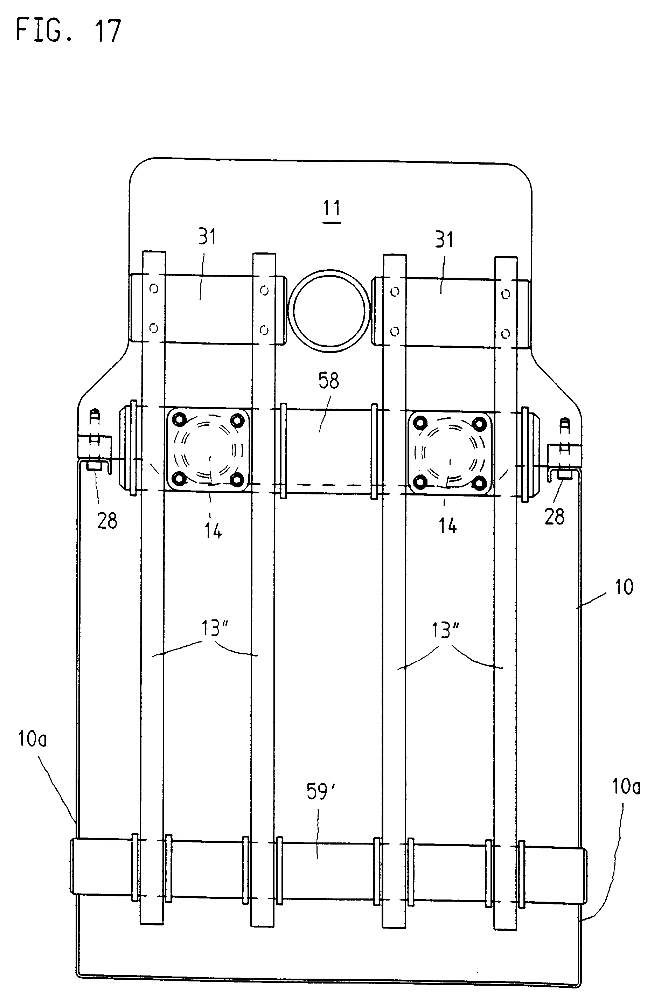

- Fig. 17: eine Ansicht des Ausschnitts gem. Fig. 16 aus Sicht der Spritzgießeinheit,

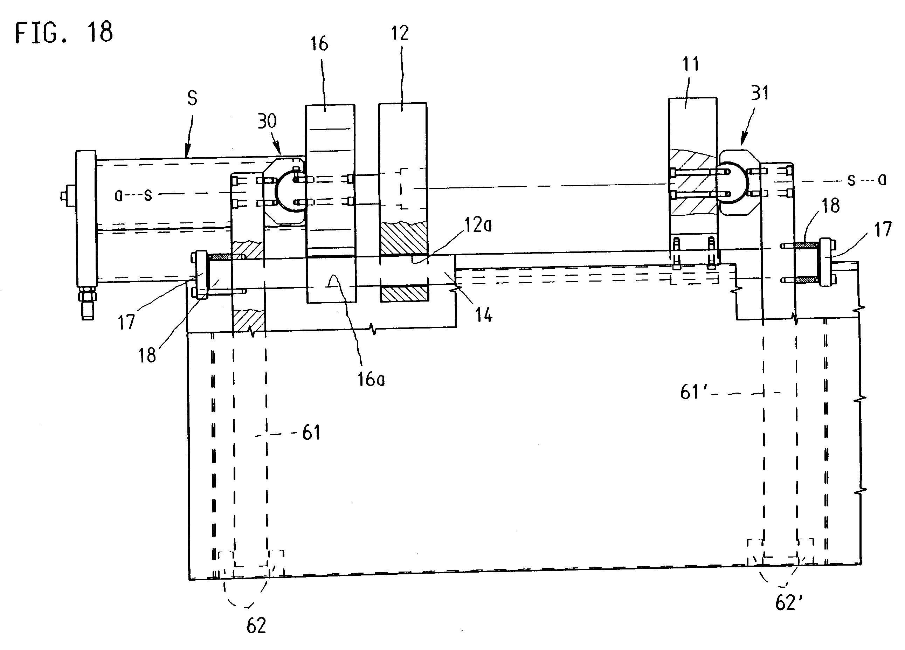

- Fig. 18: eine Ansicht gem. Fig. 1 in einem achten Ausführungsbeispiel, wobei die Hebel in einem Schienenpaar des Maschinenfußes gelagert sind.

Die Kunststoff-Spritzgießmaschine besitzt eine Formschließeinheit, die einen stationären Formträger 11 und einen beweglichen Formträger 12 umfaßt. Zwischen den Formträgern 11, 12 ist ein Formwerkzeug M (in Fig. 1) aufnehmbar. Beide Formträger sind über Kraftübertragungsmittel miteinander verbunden und über eine Schließeinrichtung S ist der bewegliche Formträger 12 auf den stationären Formträger 11 zu und von ihm weg bewegbar. Quer zur Schließrichtung s-s sind Hebel 13, 13' etwa vertikal angeordnet. In unterschiedlichem Abstand a,b von einer durch die Anlenkungspunkte der Hebel 13, 13' gelegten Schließachse a-a und etwa parallel zur Schließrichtung sind holmartige Verbindungselement etwa horizontal vorgesehen, die die Hebel miteinander verbinden. Die Verbindungselemente bilden gemeinsam mit den Hebeln 13, 13' einen Kraftrahmen und somit Kraftübertragungsmittel. An den Kraftübertragungsmitteln und ohne Einfluß auf den Maschinenfuß oder beim siebenten und achten Ausführungsbeispiel allenfalls mit gerinem Einfluß, stützen sich wenigstens eine Schließeinrichtung S sowohl zum Schließen des Formwerkzeuges M als auch zur Aufbringung der Schließkräfte ab. Selbstverständlich können zum Schließen des Formwerkzeuges als auch zum Aufbringen der Schließkräfte zwei gesonderte Schließeinrichtungen vorgesehen werden, wie weiter unten noch erläutert wird.

Die Formschließeinheit steht bei den Beispielen der Fign. 1-15 nur über den stationären Formträger 11 mit dem Maschinenfuß 10 in fester Verbindung, der dort über Schrauben 28 festgelegt ist. Im übrigen ist die Formschließeinheit in Schließrichtung s-s axial frei beweglich. Die Formträger 11, 12 sind an den Kraftübertragungsmitteln, also an den Hebelsystemen zumindest mittelbar gelenkig gelagert, so daß die Verformungen vom Formwerkzeug M entfernt gehalten werden können. Die gelenkige Lagerung erfolgt über die Gelenke 30,31.

Die Verbindungselemente sind Holme, wobei die nahe an der Schließachse a-a angeordneten Holme beim Aufbringen der Schließkraft Zugholme 14 und die weiter entfernt liegenden Holme Druckholme 15 sind. In den Ausführungsbeispielen der Fign. 1-15 sind jeweils wenigstens zwei Kraftrahmen bestehend aus je zwei Hebeln 13, 13', einem Zugholm und einem Druckholm vorgesehen, jedoch sind auch andere Ausführungsformen denkbar. Wesentlich ist lediglich, daß ein geschlossener Kraftrahmen erzeugt wird, an und in dem die Schließeinrichtung S angreift. Der Abstand a der Zugholme 14 und b der Druckholme 15 von der Schließachse a-a beeinflußt die von diesen Holmen zu übertragenden Kräfte nach dem Hebelgesetz. Verkaufsargumente und ästhetische Gründe können jedoch dafür sprechen, die Zugholme in einen Bereich zu verlegen, der vom Maschinenfuß 10 abgedeckt ist.

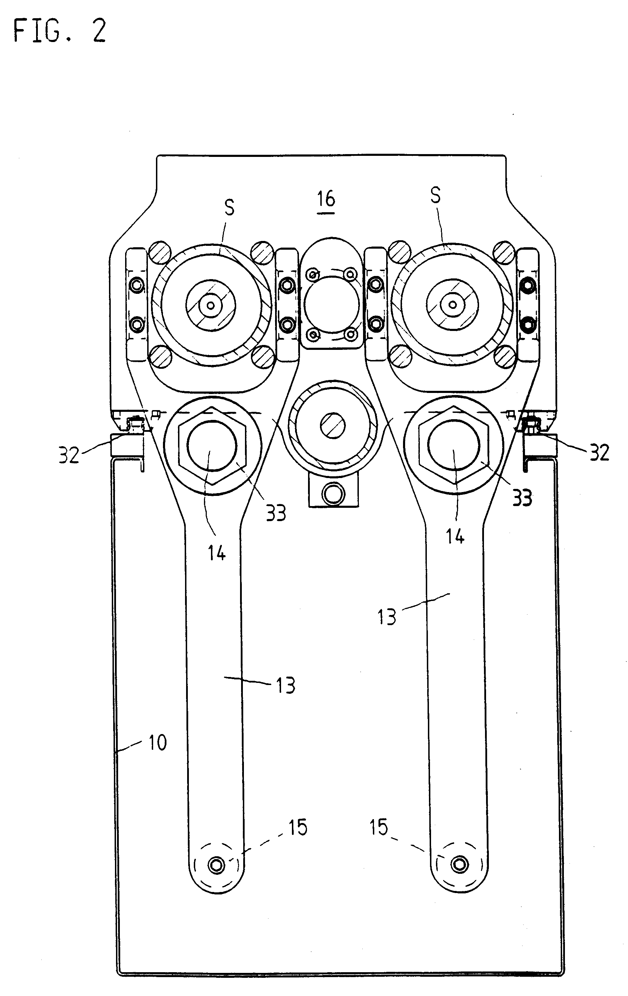

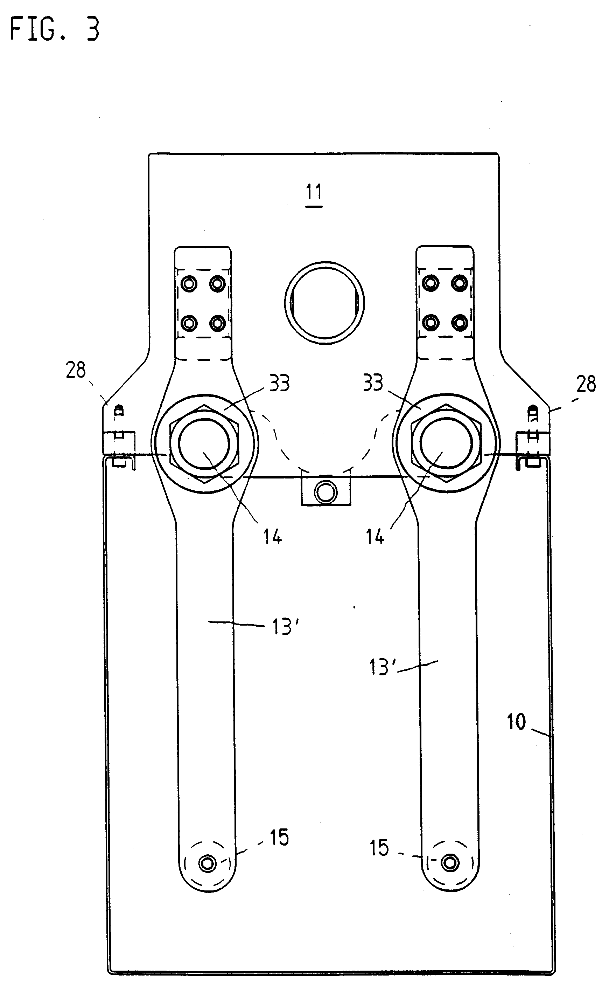

In Fig. 1 sind die Zugholme gelenkig mit den Hebeln verbunden, während die Druckholme 15 fest mit den Hebeln 13, 13' über die Schrauben 29 verbunden sind. Die Anlenkung der Zugholme kann jedoch auch gemäß Fig. 1a so ausgebildet werden, daß die Zugholme 14 nicht nur den stationären Formträger 11, den beweglichen Formträger 12 und ein Abstützelement 16 für die hier hydraulische Schließeinrichtung S durchgreifen, sondern auch die Hebel 13, 13' durchgreifen und an ihren Enden in Halteplatten fest gelagert sind, die ihrerseits über Muttern 18 die Kräfte in die Hebel einleiten. Selbstverständlich sind auch andere Antriebsmöglichkeiten z.B. elektrischer oder pneumatischer Natur für die Schließeinrichtung einsetzbar. Um den Durchgriff der Zugholme durch Formträger 11, 12 und Abstützelement 16 zu ermöglichen, sind diese Elemente mit Ausnehmungen 11a, 12a, 16a versehen. Da die Zugholme 14 im wesentlichen nur Längsverformungen unterworfen sind, können sie trotz ihrer kraftübertragenden Funktion auch dem Abstützelement 16 und dem beweglichen Formträger 12 als Führung dienen. Selbstverständlich sind jedoch auch andere Führungen, beispielsweise gemäß Fig. 1 möglich, bei denen Abstützelement 16 und beweglicher Formträger 12 in Linearführungen, beispielsweise in Führungsleisten 32 auf dem Maschinenfuß 10 geführt sind. Soweit erforderlich, können bei Wegfall des Abstützelements 16 die Führungen für den beweglichen Formträger auch so ausgebildet werden, daß sie eine vergrößerte Auflagefläche bilden, die sich sogar bis in den Formspannraum erstreckt. Gemäß Fig. 2 ist beispielsweise das Abstützelement 16 auf den Führungsleisten 32 gelagert. Die Hebel 13 sind gabelförmig ausgebildet und umgreifen im Anlenkungsbereich am Abstützelement 16 die Schließeinrichtung S. Dies ist lediglich aus Platzgründen erforderlich, da ansonsten eine Lagerung, wie in Fig. 3 für die Hebel 13' dargestellt, möglich ist.

Aus den Fign. 4, 4a sind Lagerungen für das Gelenk 31, 31' zu entnehmen, das so ausgebildet ist, daß sowohl Druck- als auch Zugkräfte übertragbar sind. Die Gelenke haben die Aufgabe, bei einer Schiefstellung der Hebel 13' nicht die Planparallelität der Formträger zu beeinträchtigen. Das Gelenk 31, 31' besteht aus einem Gelenkbolzen 36, 36', der über Bolzen 35 am stationären Formträger 11 befestigt ist, und aus einer Gelenkpfanne 37, 37', die über Bolzen 34 mit dem Hebel 13' verbunden ist. Selbstverständlich ist auch eine Umkehrung möglich. Fig. 4 und Fig. 4a unterscheiden sich dadurch, daß der Gelenkbolzen 36' in Fig. 4a in eine Ausnehmung 11b des stationären Formträgers 11 eingreift. Dadurch ist eine vertikale Fixierung des Hebels 13' gewährleistet. Die Anordnung der Gelenkteile vom Formwerkzeug aus gesehen hinter den Formträgern reduziert die Biegebeanspruchung der Formträger. Durch die Austauschbarkeit von Gelenk und Gelenkpfanne können die stärker beanspruchten Gelenkteile leicht ausgetauscht werden, und Verschleißerscheinungen an Verformungselement und stationärem Formträger oder Abstützelement werden vermieden. Ferner können bedarfsweise längere Bolzen 34',35' vorgesehen werden, die Unterlegstücke 63 durchgreifen, so daß das Formaufspannmaß leicht verändert werden kann, um bedarfsweise geringere Werkzeugmaße zu berücksichtigen. Die Fign. 5, 5a verwirklichen die gelenkige Lagerung der Zugholme 14. Die Hebel 13 sind im Ausführungsbeispiel der Fign. 1 und 1a flach ausgebildet. Der Zugholm durchgreift mit einem Gewindebereich 14b den Hebel 13 und Kugelsegmente 19 werden über Spannmuttern 33, die mit dem Gewinde der Zugholme 14 in Verbindung stehen, so festgelegt, daß sie denselben ideellen Drehpunkt haben. Dadurch läßt sich nicht nur die gelenkige Lagerung der Zugholme 14 verwirklichen, sondern auch die Einstellung der Planparallelität von stationärem und beweglichem Formträger. Eine verbesserte Fixierung ergibt sich gemäß Fig. 5a dadurch, daß die Kugelsegmente 19' größer ausgebildet werden, die Spannmuttern 33' die Kugelsegmente 19' übergreifen und auf dem Gewindebereich 14b des Zugholms 14 zusätzlich noch Kontermuttern 20 vorgesehen werden, die eine verbesserte Fixierung und ein Festspannen der Kugelsegmente 19' bewirken.

Während in Fig. 1 die hydraulische Schließeinrichtung S am Anlenkungspunkt eines Hebels 13, 13' am axial beweglichen Abstützelement 16 angreift und sowohl für die Bewegung des beweglichen Formträgers auf dem stationären Formträger 11 hin und von diesem weg als auch zur Aufbringung der Schließkraft vorgesehen ist, werden im dritten Ausführungsbeispiel der Fign. 6 und 7 elektromechanische Antriebe 23, 24 vorgesehen, bei denen die Funktion Bewegen des Formträgers und Aufbringen der Schließkraft teilweise voneinander getrennt ist. Zugholme 14 und Druckholme 15 besitzen Spindelbereiche 14a, 15a. Auf diesen Spindelbereichen sind Spindelmuttern 21, 22 über Antriebe 23, 24 rotierbar, die an wenigstens einem Hebel 13 widergelagert sind. Der Antrieb 23 besitzt dabei ein Riemenrad 40, das einen Riemen 38 bewegt, der über Riemenräder 44, 45 die Spindelmuttern 21 auf den Zugholmen bewegt. Der Antrieb 24 besitzt ein Riemenrad 41, das mit einem Riemen 39 zusammenarbeitet, der zwei Riemenräder 42, 43 antreibt, die mit Spindelmuttern 22 verbunden sind, die auf den Druckholmen rotierbar sind. Beim Schließen der beweglichen Werkzeugplatte laufen die beiden Motoren synchron, so daß sich die beiden vertikalen Hebel 13 zusammen mit den Lagerstellen und den Antrieben in Richtung auf den stationären Formträger bewegen. Soll jedoch die Schließkraft aufgebracht werden, so wird der Antrieb 23 abgeschaltet und der Antrieb 24, der den Druckholmen 15 zugeordnet ist, erzeugt über das Hebelsystem die Schließkraft. Die Lagerungen der beiden Antriebsmuttern sind beweglich über Pendelrollenlager gelagert. Gemäß Fig. 7 sind die beiden vertikalen Hebel 13 über Platten 25 miteinander verbunden, an denen sich die Motoren 23, 24 der Spindelantriebe abstützen. In einer zeichnerisch nicht dargestellten Ausführungsform kann jedoch auch ein Antriebsmotor alle vier Muttern von Zug- und Druckholmen über einen einzigen Zahnriemen antreiben, und die Schließkraft wird dann über einen separaten Antrieb beispielsweise auf der gegenüberliegenden Seite in die Druckholme eingeleitet.

Die Fign. 8 und 9 zeigen ein viertes Ausführungsbeispiel, bei dem bei der Bewegung des beweglichen Formträgers die Massen dadurch reduziert sind, daß lediglich der bewegliche Formträger 12 zusammen mit der Spindel 48 axial bewegt wird. Die Schließeinrichtung befindet sich zwischen den Zugholmen 14 auf einer Brücke 60 und treibt über das Riemenrad 51 den Riemen 56 und damit die Riemenräder 52, 53 an, die die Spindelmutter 57 bewegen. Durch die Rotation der Spindelmutter 57 wird dann der bewegliche Formträger seinerseits wieder bewegt. Wie in Fig. 1a sind die Zugholme über Halteplatten und Muttern gelenkig mit den vertikalen Hebeln verbunden. Durch diese Anordnung kann eine Schiefstellung der vertikalen Hebel ausgeglichen werden. Die Schließkraft wird durch den Antrieb 26 hervorgerufen, der am Hebel 13 gelagert ist. Der Antrieb besitzt eine Druckstange 50, an der die Druckholme in Lagerungen 47 gelagert sind. Bei Bewegung der Druckstange 50 über den Antrieb 26 werden die Druckholme 15 aus einer geneigten Stellung in eine horizontale Stellung überführt, wobei ein Hub x erzeugt wird, der zu einem größeren Abstand der Hebel 13, 13' im Bereich der Druckholme führt. Über die gelenkige Lagerung im Bereich der Zugholme wird dadurch die Schließkraft erzeugt, wobei eine Überführung der Druckholme 15 in Pfeilrichtung erfolgt. Die Anordnung kann dabei auf beiden Seiten vorgenommen werden. Die Schließkraft wird über die Druckholme 15 und über die Linearführung des beweglichen Formträgers 12 auf den Zugholmen 14 eingeleitet. Befinden sich die Druckholme in ihrer horizontalen Lage, ist die maximale Schließkraft erreicht. Über eine Lagerplatte 26a ist der Antrieb 26 gemäß Fig. 9 zwischen den beiden Hebeln 13 gelagert.

In Fig. 10 ist in einem fünften Ausführungsbeispiel die Aufbringung der Schließkraft über einen Exzenter E dargestellt. Der Exzenter wird über einen Antrieb 54 und einen Riemen 55 angetrieben. Aus den Fign. 12 und 13 ergibt sich, daß der Exzenter E von der Exzenterachse e-e bis in unterschiedlich beabstandete Bereiche reicht. Wird daher der Exzenter über den Antrieb 54 bewegt, kann diese Bewegung zur Aufbringung der Schließkraft ausgenutzt werden. Die Lagerstellen von Exzenter E, Zugholmen 14 und Spindellagerung 48 liegen in einer vertikalen Achse v-v, so daß bei Schiefstellung der Hebel 13 horizontale Fluchtungsfehler vernachlässigbar sind. Die Bewegung des beweglichen Formträgers 12 erfolgt wie im vierten Ausführungsbeispiel, und Fig. 11 zeigt diesbezüglich die gelenkige Lagerung der Spindel 48. Die Schließeinheit treibt über einen Riemen 56 die Spindelmutter 57 an, die in einem Gelenk 49 drehbar gelagert ist. Das Gelenk 49 seinerseits wiederum ist in einem Gehäuse 46 gelagert, das einen Teil des Hebels 13 darstellt, jedoch auch mit den vertikalen Hebeln verschraubt sein kann. Durch diese Anordnung kann eine Schiefstellung der vertikalen Hebel ausgeglichen werden. Gemäß dem sechsten Ausführungsbeispiel der Fign. 14 und 15 können die Hebel 13'' nicht nur flach quer zur Schließrichtung, sondern als Brennzuschnitte in Schließrichtung angeordnet werden. Die Auslegung der Brennzuschnitte erfolgt nach der maximalen Momentenbelastung, wobei gelenkige Lagerungen für die Zugholme 14 und die Druckholme 15 vorgesehen werden können. Wie in Fig. 1a sind die Zugholme über Halteplatten 17 und Muttern 18 an den Gelenken gelagert. Ganz nach Bedarf können mehrere Hebel, in Fig. 15 vier Hebel 13'' vorgesehen werden, die durch Lagerbolzen 58, 59 durchgriffen sind.

Anstelle der im vierten und fünften Ausführungsbeispiel vorgesehenen zwei Spindeln 48 für die Bewegung des beweglichen Formträgers kann auch nur eine Spindel vorgesehen sein, jedoch muß dann im Gegenzug meist die Führung und Auflagefläche des beweglichen Formträgers 12 vergrößert werden. Die Vergrößerung der Auflagefläche ist aber auch erforderlich, wenn der Auswerfer in diesem Fall in Reihe mit der Spindel 48 angeordnet werden muß, während er sonst zwischen den beiden Spindeln angeordnet werden kann.

In den ersten sechs Ausführungsbeispielen der Fign. 1-15 ist die Formschließeinheit jeweils nur an einer Stelle fest mit dem Maschinenfuß 10 verbunden. Im siebten und achten Ausführungsbeispiel dagegen, wird der Maschinenfuß 10 als Verbindungselement genutzt. Die Hebel 13'', 61, 61' sind dabei einerseits über einen Zugholm 14 miteinander verbunden, als "Druckholm" wird aber der Maschinenfuß 10 eingesetzt. In diesen beiden Beispielen ist also das weiter von der Schließachse a-a entfernte Verbindungselement der Maschinenfuß, wobei die Hebel an Lagerelementen angelegt sind, die mit dem Maschinenfuß verbunden sind. Fig. 16 ist eine Darstellung gemäß Fig. 14, wobei der Lagerbolzen 59' gegenüber dem sechsten Ausführungsbeispiel einfach nach außen verlängert und in Durchtrittsöffnungen 10a des Maschinenfußes gelagert ist. Im Ausführungsbeispiel der Fig. 18 hingegen werden die Hebel 61, 61' in einem als Lagerelement ausgebildeten Schienenpaar 62, 62'' lose eingesteckt, das am Maschinenfuß befestigt ist. Die Schließeinrichtung ist in diesen beiden Fällen über ein Abstützelement 16 unmittelbar im Bereich des beweglichen Formträgers 12 angelenkt. Gegenüber den ersten sechs Beispielen hat diese Ausführungsform den Nachteil, daß nun auch Verformungen im Maschinenfuß eingeleitet werden. Allerdings erfolgt diese Einleitung in einem solchen Abstand von der Formschließeinheit, daß ein Einfluß weitgehend vermieden wird. Die Schließeinrichtung S stützt sich in allen Fällen an dem Kraftrahmen selbst ab, also vorzugsweise auf den Verbindungsgeraden zwischen den Verbindungspunkten von Hebeln und Verbindungselementen oder im Bereich des beweglichen Formträgers. Da hier aber die wesentlichen Kräfte eingeleitet werden, erzeugen diese keinen oder in den letzten beiden Ausführungsbeispielen nur geringe Verformungen auf dem Maschinenfuß. Allen Ausführungsbeispielen ist gemeinsam, daß ein tatsächlicher (Fig. 1-15) oder ein ideeller (Fig. 16-18) Kraftrahmen geschaffen wird, der über Zug- und Druckelemente verfügt, die die entstehenden Kräfte außerhalb des Formspannraums ableiten. Eine Einleitung von Kräften erfolgt nicht (Fig. 1-15) oder lediglich in geringem Umfang und in einem solchen Abstand von der Formschließeinheit, daß auftretende Verformungen sich dort nicht auswirken können.

Die Gelenke 30, 31 können auch in zeichnerisch nicht dargestellter Weise unmittelbar seitlich an Abstützelement 16 und stationärem Formträger 11 angelenkt sein. Schließachse a-a und durch die Anlenkpunkte gezogene Geraden schneiden sich dann in der Mitte des Abstützelements 16 bzw. des stationären Formträgers 11. Dadurch können die auftretenden Verformungen noch weiter verringert werden und der gesamte Kraftübertragungsmechanismus kann kürzer ausgestaltet werden.

## Patentansprüche

1. Kunststoff-Spritzgießmaschine mit einer Formschließeinheit mit einem stationären Formträger (11) und einem beweglichen Formträger (12), zwischen denen ein Formwerkzeug (M) aufnehmbar ist und die über Kraftübertragungsmittel miteinander verbunden sind, die wenigstens zwei im wesentlichen quer zur Schließrichtung (s-s) angeordnete Hebel (13, 13', 13'', 61, 61') umfassen, die über in unterschiedlichem Abstand (a-b) von einer durch die Anlenkungspunkte der Hebel gelegten Schließachse (a-a) und etwa parallel zur Schließrichtung (s-s) angeordnete Verbindungselemente miteinander verbunden sind, wobei die Verbindungselemente und die Hebel (13, 13', 13'', 61, 61') gemeinsam einen Rahmen bilden, an dem sich die wenigstens eine Schließeinrichtung (S) sowohl zum Schließen des Formwerkzeuges (M) als auch zur Aufbringung der Schließkräfte abstützt, dadurch gekennzeichnet, daß Verbindungselemente und Hebel für sich einen Rahmen bilden, an dem die Formträger gelenkig gelagert sind, wobei Gelenkteile (Gelenkbolzen 36,36', Gelenkpfannen 37,37') von Gelenken (31,31') dieser gelenkigen Verbindung lösbar angeordnet sind.

2. Spritzgießmaschine nach Anspruch 1, dadurch gekennzeichnet, daß die Formschließeinheit abgesehen vom stationären Formträger (11) im übrigen in Schließrichtung (s-s) axial frei beweglich ist.

3. Spritzgießmaschine nach einem der vorhergehenden Ansprüche, dadurch gekennzeichnet, daß wenigstens ein Zugholm (14) die Hebel (13, 13') durchgreift und in Halteplatten (17) widergelagert ist, die sich über Muttern (18) an den Hebeln (13, 13') abstützen (Fig. 1a).

4. Spritzgießmaschine nach einem der vorhergehenden Ansprüche, dadurch gekennzeichnet, daß wenigstens ein Zugholm die Formträger (11, 12) und/oder das Abstützelement (16) durchgreift und dem beweglichen Formträger (12) und/oder dem Abstützelement (16) als Führung dient.

5. Spritzgießmaschine nach einem der vorhergehenden Ansprüche, dadurch gekennzeichnet, daß die gelenkige Lagerung des Zugholms (14) je zwei auf den flachen Hebeln (13, 13') gelagerte Kugelsegmente (19) umfaßt, die denselben Drehpunkt haben (Fig. 5).

6. Spritzgießmaschine nach einem der Ansprüche 1-4, dadurch gekennzeichnet, daß die gelenkige Lagerung des Zugholms (14) mit zwei Kontermuttern (20) versehen ist, die Spannmuttern (33') an den Kugelsegmenten (19') verspannen (Fig. 5a).

7. Spritzgießmaschine nach einem der vorhergehenden Ansprüche, dadurch gekennzeichnet, daß die Schließeinrichtung (S) am Anlenkungspunkt eines Hebels (13, 13') an einem axial beweglichen Abstützelement (16) angreift, das auf einem Maschinenfuß (10) geführt ist.

8. Spritzgießmaschine nach einem der Ansprüche 1-6, dadurch gekennzeichnet, daß wenigstens ein Verbindungselement Spindelbereiche (14a, 15a) aufweist, auf denen Spindelmuttern (21, 22) über Antriebe (23, 24) rotierbar sind, die an wenigstens einem Hebel (13) widergelagert sind (Fig. 6).

9. Spritzgießmaschine nach Anspruch 8, dadurch gekennzeichnet, daß zum Schließen des Formwerkzeuges (M) Spindelmuttern (21, 22) sowohl am Zugholm (14) als auch am Druckholm (15) betätigt werden, während zur Erzeugung der Schließkraft der am Druckholm (15) angeordnete Motor die Spindelmutter (22) antreibt.

10. Spritzgießmaschine nach einem der Ansprüche 1-6, dadurch gekennzeichnet, daß ein Antrieb (26) den Druckholm (15) zur Erzeugung der Schließkraft aus einer geneigten Stellung in eine horizontale Spannstellung überführt (Fig. 8).

11. Spritzgießmaschine nach einem der Ansprüche 1-6, dadurch gekennzeichnet, daß der Druckholm (15) über einen Exzenter (E) am Hebel (13) gelagert ist, der bei Betätigung die Schließkraft aufbringt.

12. Spritzgießmaschine nach Anspruch 11, dadurch gekennzeichnet, daß die Lagerungen von Exzenter (E), Zugholm (14) und Spindel (Spindelbereich 15a) etwa in einer vertikalen Achse (v-v) liegen.

13. Spritzgießmaschine nach einem der vorhergehenden Ansprüche, dadurch gekennzeichnet, daß eines der Verbindungselemente der Maschinenfuß (10) ist, an dem die Hebel (13'', 61, 61') angelenkt sind.

14. Spritzgießmaschine nach Anspruch 13, dadurch gekennzeichnet, daß das weiter von der Schließachse (a-a) entfernte Verbindungselement der Maschinenfuß (10) ist, wobei die Hebel (13'', 61, 61') an einem Lagerbolzen (59') angelenkt sind, der in Durchtrittsöffnungen (10a) des Maschinenfußes (10) gelagert ist (Fig. 17).

15. Spritzgießmaschine nach Anspruch 13 oder 14, dadurch gekennzeichnet, daß die Hebel (61, 61') in einem als Lagerelement ausgebildeten Schienenpaar (62, 62') lose eingesteckt sind, das am Maschinenfuß befestigt ist (Fig. 18).

16. Spritzgießmaschine nach einem der vorhergehenden Ansprüche, dadurch gekennzeichnet, daß die Schließeinrichtung (S) sich etwa an den Verbindungsgeraden zwischen den Verbindungspunkten von Hebeln, Verbindungselementen oder im Bereich des beweglichen Formträgers (12) am Rahmen abstützt.

17. Spritzgießmaschine nach einem der vorhergehenden Ansprüche, dadurch gekennzeichnet, daß der Abstand zwischen stationärem Formträger (11) und beweglichem Formträger (12) durch Unterlegstücke (63) veränderbar ist, die zwischen Gelenkteilen und Hebeln bzw. stationärem Formträger oder Abstützelement einfügbar sind.

## Claims

1. Plastics material injection moulding machine including a mould closing unit having a stationary mould carrier (11) and a movable mould carrier (12), between which a mould tool (M) is receivable and which are interconnected via force transmitting means, which embrace at least two levers (13, 13', 13'', 61, 61') which are disposed substantially transversely relative to the closing direction (s-s), which level ale interconnected via connecting elements which are disposed at a variable distance (a-b) from a closing axis (a-a) formed through the pivotal points of the levers and are approximately parallel relative to the closing direction (s-s), the connecting elements and the levers (13, 13', 13'', 61, 61') together forming a frame, on which at least the one closing device (S) is supported both for the closing of the mould tool (M) and for the applying of the closing forces, characterised in that connecting elements and levers together form a frame, on which the mould carriers are disposed so as to be pivotal, pivotal parts (pivotal bolts 36, 36', pivotal sockets 37, 37') being disposed so as to be detachable from joints (31,31') of this pivotal connection.

2. Injection moulding machine according to claim 1, characterised in that the mould closing unit is axially freely movable in the closing direction (s-s) except for the stationary mould carrier (11).

3. Injection moulding machine according to one of the previous claims, characterised in that at least one tension spar (14) penetrates the levers (13, 13') and is supported in retaining plates (17) which are supported on the levers (13, 13') by nuts (18) (Figure 1a).

4. Injection moulding machine according to one of the previous claims, characterised in that at least one tension spar penetrates the mould carriers (11, 12) and/or the supporting element (16) and acts as a guide to the movable mould carrier (12) and/or the supporting element (16).

5. Injection moulding machine according to one of the previous claims, characterised in that the pivotal bearing arrangement of the tension spar (14) embraces in each case two spherical segments (19), which are mounted on the flat levers (13, 13'), the spherical segments having the same point of rotation (Figure 5).

6. Injection moulding machine according to one of the claims 1 - 4, characterised in that the pivotal bearing arrangement of the tension spar (14) is provided with two lock nuts (20), which tighten adjusting nuts (33') on the spherical segments (19') (Figure 5a).

7. Injection moulding machine according to one of the previous claims, characterised in that at the pivotal point of the levers (13, 13'), the closing unit (S) engages an axially movable supporting element (16), which is guided on a machine base (10).

8. Injection moulding machine according to one of the claims 1 - 6, characterised in that at least one connecting element has spindle areas (14a, 15a), on which spindle nuts (21, 22) are rotatable via driving means (23, 24), which are supported on at least one lever (13) (Figure 6).

9. Injection moulding machine according to claim 8, characterised in that for the closing of the mould tool (M) spindle nuts (21, 22) are actuated both on the tension spar (14) and on the pressure spar (15), whilst for the generation of the closing force the motor, disposed on the pressure spar (15), drives the spindle nuts (22).

10. Injection moulding machine according to one of the claims 1 - 6, characterised in that, for the generation of the closing force, a driving means (26) transfers the pressure spar (15) from an inclined position into a horizontal clamping position (Figure 8).

11. Injection moulding machine according to one of the claims 1 - 6, characterised in that the pressure spar (15) is mounted via an eccentric (E) on the lever (13) which provides the closing force when actuated.

12. Injection moulding machine according to claim 11, characterised in that the bearing arrangements of eccentric (E), tension spar (14) and spindle (spindle area 15a) lie approximately in a vertical axis (v-v).

13. Injection moulding machine according to one of the previous claims characterised in that one of the connecting elements is the machine base (10), on which the levers (13'', 61, 61') are pivoted.

14. Injection moulding machine according to claim 13, characterised in that the connecting element further away from the closing axis (a-a) is the machine base, the levers (13'', 61, 61') being pivoted on a bearing pin (59'), which is mounted in openings (10a) in the machine base (10) (Figure 17).

15. Injection moulding machine according to claim 13 or 14, characterised in that the levers (61, 61') are inserted loosely in a pair of guides (62, 62'), which is configured as bearing element and is secured to the machine base (Figure 18).

16. Injection moulding machine according to one of the previous claims, characterised in that the closing device (S) is supported on the frame approximately on the connecting straights between the connecting points of levers, connecting elements or in the region of the movable mould carrier (12).

17. Injection moulding machine according to one of the previous claims, characterised in that the distance between the stationary mould carrier (11) and the movable mould carrier (12) is changeable via washer pieces 63, which are insertable between pivotal parts and levers or the stationary mould carrier or supporting element.

## Revendications

1. Machine d'injection de plastique avec une unité de fermeture de moules, un support de moule stationnaire (11) et un support de moule mobile (12), entre lesquels peut être reçu un outil de moule (M) et qui sont reliés ensemble par des moyens de transmission de force comprenant au moins deux leviers (13,13',13'',61,61') agencés sensiblement perpendiculairement à l'axe de fermeture (s-s), et qui sont reliés ensemble par des éléments de liaison agencés à différentes agences (a-b) à partir de l'axe de fermeture (a-a) passant par les points d'articulation des leviers et agencés sensiblement parallèles à la direction de fermeture (s-s), dans laquelle les éléments de liaison et les leviers (13,13',13'',61,61') forment ensemble un cadre sur lequel agit au moins un dispositif de fermeture (S) aussi bien pour fermer l'outil de moule (M) que pour générer des forces de fermeture, caractérisée en ce que les éléments de liaison et les leviers formant le cadre sont reliés de manière articulée aux supports de moules, dans lesquels les pièces d'articulation (axes d'articulation 36,36', coquilles d'articulation 37,37') de ces articulations (31,31') sont agencées de manière démontable dans ces liaisons articulées.

2. Machine d'injection selon la revendication 1, caractérisée en ce que l'unité de fermeture de moule est axialement mobile librement au demeurant dans la direction de fermeture (s-s) tel que vu à partir du support de moule stationnaire (11).

3. Machine d'injection selon l'une des revendications précédentes, caractérisée en ce qu'au moins un longeron de traction (14) traverse les leviers (13,13') et est en appui dans des plaques de retenue (17) qui sont elles-mêmes en appui contre les leviers (13,13') par des écrous (18) (figure 1a).

4. Machine d'injection selon l'une des revendications précédentes, caractérisée en ce qu'au moins un longeron de traction traverse le support de moule (11,12) et/ou l'élément d'appui (16), et en ce qu'il sert de guidage pour le support de moule mobile (12) et/ou l'élément d'appui (16).

5. Machine d'injection selon l'une des revendications précédentes, caractérisée en ce que la liaison articulée du longeron de traction (14) comprend respectivement deux segments sphériques (19) en appui contre les faces de levier (13,13'), ces segments ayant un même point de rotation (figure 5).

6. Machine d'injection selon l'une des revendications 1 à 4, caractérisée en ce que la liaison articulée du longeron de traction (14) est prévue avec deux contre-écrous (20) qui serrent les écrous de serrage (33') contre les segments sphériques (19') (figure 5).

7. Machine d'injection selon l'une des revendications précédentes, caractérisée en ce que le dispositif de fermeture (S) est en prise au niveau d'un point d'articulation des leviers (13,13') à un élément d'appui (16) mobile axialement qui est guidé sur le pied de machine (10).

8. Machine d'injection selon l'une des revendications 1 à 6, caractérisée en ce qu'au moins un élément de liaison présente une zone filetée (14a,15a) sur laquelle un écrou de vis sans fin (21,22) peut être entraîné en rotation par un entraînement (23, 24) qui est en appui au moins contre un lever (13) (figure 6).

9. Machine d'injection selon la revendication 8, caractérisée en ce que, pour la fermeture de l'outil de moule (M), des écrous de vis sans fin (21,22) sont mis en oeuvre aussi bien sur le longeron de traction (14) que sur le longeron de compression (15), alors que pour la création de la force de fermeture, le moteur agencé sur le longeron de compression (15) entraîne l'écrou de vis sans fin (22).

10. Machine d'injection selon l'une des revendications 1 à 6, caractérisée en ce que, pour produire une force de fermeture, un entraînement (26) déplace le longeron de compression (15) d'une position oblique à une position horizontale de serrage (figure 8).

11. Machine d'injection selon l'une des revendications 1 à 6, caractérisée en ce que le longeron de compression (15) est relié au lever (13) par un excentrique (E) dont la mise en oeuvre génère une force de fermeture.

12. Machine d'injection selon la revendication 11, caractérisée en ce que des liaisons de l'excentrique (E), du longeron de traction (14) et de la vis sans fin (zone de vis sans fin 15a) se situent sensiblement le long d'un axe vertical (v-v).

13. Machine d'injection selon l'une des revendications précédentes caractérisée en ce qu'un des éléments de liaison est le pied de machine (10) auquel sont articulés les leviers (13',61,61').

14. Machine d'injection selon la revendication 13 caractérisée en ce que l'élément de liaison le plus éloigné de l'axe de fermeture (a-a) est le pied de machine (10) dans lequel les leviers (13,61,61') sont articulés à un axe d'articulation (59') qui est agencé dans des ouvertures traversantes (10a) du pied de machine (10) (figure 17).

15. Machine d'injection selon la revendication 13 ou 14 caractérisée en ce que les leviers (61,61') sont fichés de manière lâche dans une paire de rails (62,62') formant des éléments de liaison, rails qui sont fixés dans le pied de machine (figure 18).

16. Machine d'injection selon l'une des revendications précédentes caractérisée en ce que le dispositif de fermeture (S) est en appui contre le cadre sensiblement sur la ligne de liaison entre le point de liaison des leviers, des éléments de liaison ou dans la zone du support de moule mobile (12).

17. Machine d'injection selon l'une des revendications précédentes caractérisée en ce que l'écartement entre le support de moule stationnaire (11) et le support de moule mobile (12) peut être modifié par des pièces intermédiaires (63) qui peuvent être insérées entre les pièces d'articulation et les leviers respectivement du support de moule stationnaire ou de l'élément d'appui.
